# EUROPEAN PATENT SPECIFICATION

(11) **EP 4 001 074 B1**
(45) Date of publication and mention of the grant of the patent: **19.11.2025**
(21) Application number: 21208757.1
(22) Date of filing: 17.11.2021
(51) Int. Cl.: B62J 9/14, B62J 43/16

(54) **BATTERY**
BATTERIE
BATTERIE

(30) Priority: 24.11.2020 JP 2020194481
(43) Date of publication of application: 25.05.2022
(73) Proprietor: Suzuki Motor Corporation, Shizuoka 432-8611 (JP)
(72) Inventor: NAGAYA, Keita, Hamamatsu-shi, Shizuoka 432-8611 (JP); YUKINAGA, Kohei, Hamamatsu-shi, Shizuoka 432-8611 (JP)
(74) Representative: Haseltine Lake Kempner LLP

(56) References cited:
- WO-A1-2013/180199
- WO-A1-2020/065865
- US-A1- 2007 023 216
- US-A1- 2007 089 922

## Description

### TECHNICAL FIELD

The present invention relates to a battery.

### BACKGROUND ART

In recent years, an electric straddle-type vehicle that travels on electric power has been developed. As the electric straddle-type vehicle, a scooter-type vehicle in which a battery and the like are accommodated below a seat is known (for example, see Patent Literature 1). In the straddle-type vehicle disclosed in Patent Literature 1, a pair of left and right seat frames supporting the seat from below are provided, and a battery accommodation space is formed inside the pair of left and right seat frames. Front sides of the pair of left and right seat frames are connected to each other via a bridge pipe, and a seat hinge portion is provided in the bridge pipe so as to openably and closably connect the seat.

Document WO2020/065865A1 shows the preamble of claim 1.

### CITATION LIST

### PATENT LITERATURE

Patent Literature 1: JP-A-2014-051289

### SUMMARY OF INVENTION

### TECHNICAL PROBLEM

In the electric straddle-type vehicle, further increase in a battery capacity is desired. However, in the straddle-type vehicle disclosed in Patent Literature 1, the accommodation space of the battery is narrowed by the bridge pipe provided with the seat hinge portion, and it is difficult to sufficiently ensure the battery capacity. In order to ensure a supporting rigidity of the bridge pipe, it is necessary to increase a diameter of the bridge pipe or to provide a support pipe that reinforces the bridge pipe. Therefore, there is a problem that a frame structure becomes complicated and the accommodation space of the battery is further narrowed.

The present invention has been made in view of the above points, and an object of the present invention is to provide a battery capable of sufficiently ensuring a battery capacity and ensuring a supporting rigidity of a seat hinge portion.

### SOLUTION TO PROBLEM

The scope of the present invention is defined by the appended claims.

### ADVANTAGEOUS EFFECTS OF INVENTION

According to the battery of an aspect of the present invention, since the seat hinge portion is formed in the battery case, a frame that attaches the seat hinge portion below the seat is not required. The accommodation space of the battery is widened, and the battery capacity can be sufficiently ensured by increasing a size of the battery. Since the seat hinge portion is integrally formed in the battery case, the supporting rigidity of the seat hinge portion with respect to a load from a seat side is ensured.

### BRIEF DESCRIPTION OF DRAWINGS

Fig. 1 is a left side view of a straddle-type vehicle according to the present embodiment.
Fig. 2 is a right side view of a vehicle body frame and an electric device according to the present embodiment.
Fig. 3 is a perspective view of the vehicle body frame and a battery according to the present embodiment.
Fig. 4 is perspective view of a seat hinge portion according to the present embodiment.
Fig. 5 is a plan view of the battery according to the present embodiment.
Fig. 6 is a right side view of the battery according to the present embodiment.

### DESCRIPTION OF EMBODIMENTS

A battery according to an aspect of the present invention is installed below a seat of an electric straddle-type vehicle. A battery module to which electric power for traveling is charged is accommodated in a battery case of the battery. Since the battery case is formed with a seat hinge portion that supports the seat so as to be openable and closable, a frame that attaches the seat hinge portion below the seat is not required. An accommodation space of the battery is widened, and a battery capacity can be sufficiently ensured by increasing a size of the battery. Since the seat hinge portion is integrally formed in the battery case, a supporting rigidity of the seat hinge portion with respect to a load from a seat side is ensured.

### [Example]

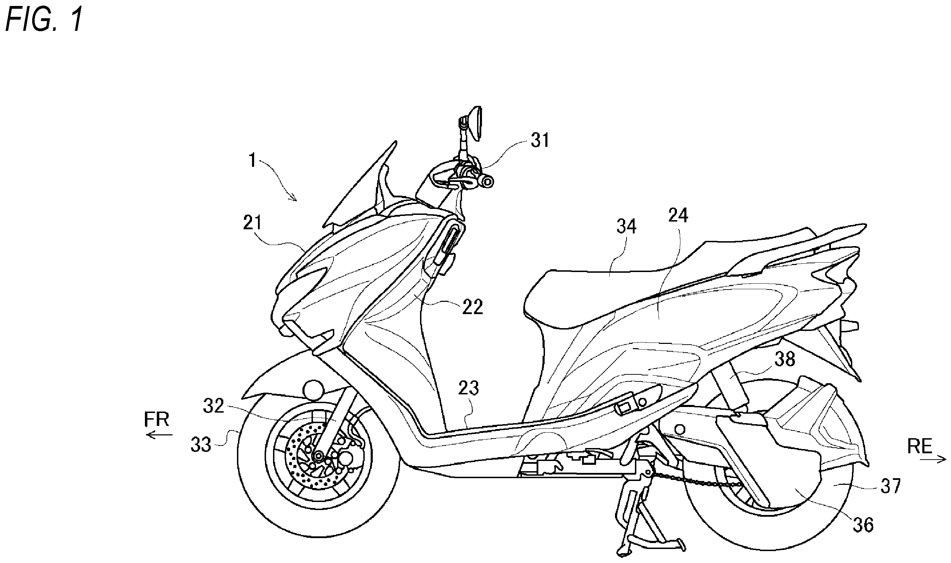

Hereinafter, the present embodiment will be described in detail with reference to the accompanying drawings. In the present embodiment, the straddle-type vehicle is a straddle-type vehicle of a scooter type, but the straddle-type vehicle may be a straddle-type vehicle of an electric or hybrid type. In addition, in the following drawings, an arrow FR indicates a vehicle front side, an arrow RE indicates a vehicle rear side, an arrow L indicates a vehicle left side, and an arrow R indicates a vehicle right side. Fig. 1 is a left side view of the straddle-type vehicle according to the present embodiment.

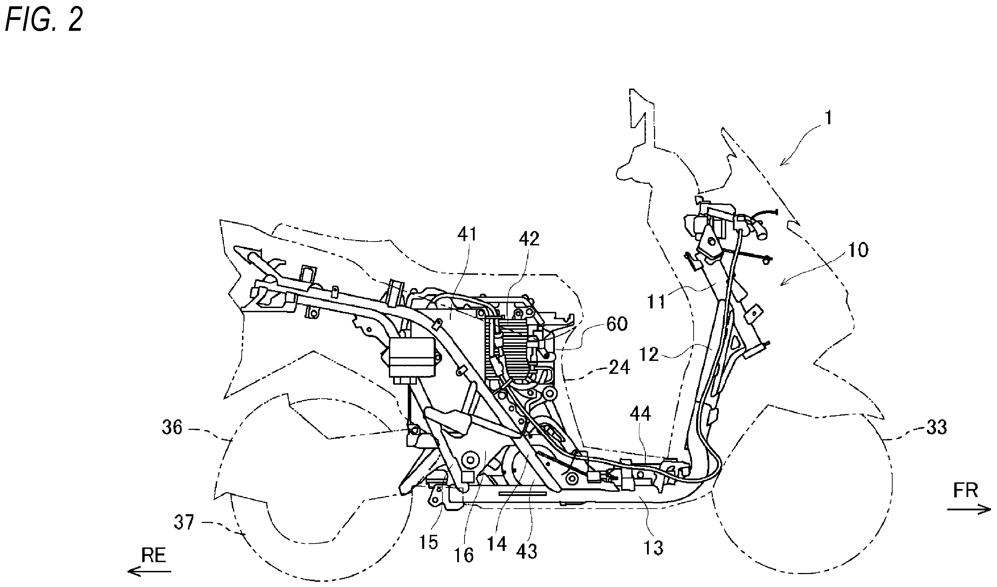

As shown in Fig. 1, a straddle-type vehicle 1 of a scooter type is formed by attaching various covers to an underbone type vehicle body frame 10 (see Fig. 2) as a vehicle body exterior. A front frame cover 21 is provided on a front side of a vehicle, and a leg shield 22 that protects legs of a rider is provided on a rear side of the front frame cover 21. A footboard 23 extends rearward from a lower end of the leg shield 22, and a seat frame cover 24 is provided on a rear side of the footboard 23. A foot rest space for the rider is formed in front of a seat 34 by the leg shield 22 and the footboard 23.

A handle 31 is provided on an upper side of the front frame cover 21, and a front wheel 33 is rotatably supported on a lower side of the front frame cover 21 via a pair of front forks 32. The seat 34 is provided on an upper side of a seat frame cover 24, and a swing arm (not shown) covered by a swing arm cover 36 is provided on a lower side of the seat frame cover 24. A rear wheel 37 is rotatably supported at a rear portion of the swing arm, and a rear portion of the swing arm is connected to the vehicle body frame 10 via a suspension 38.

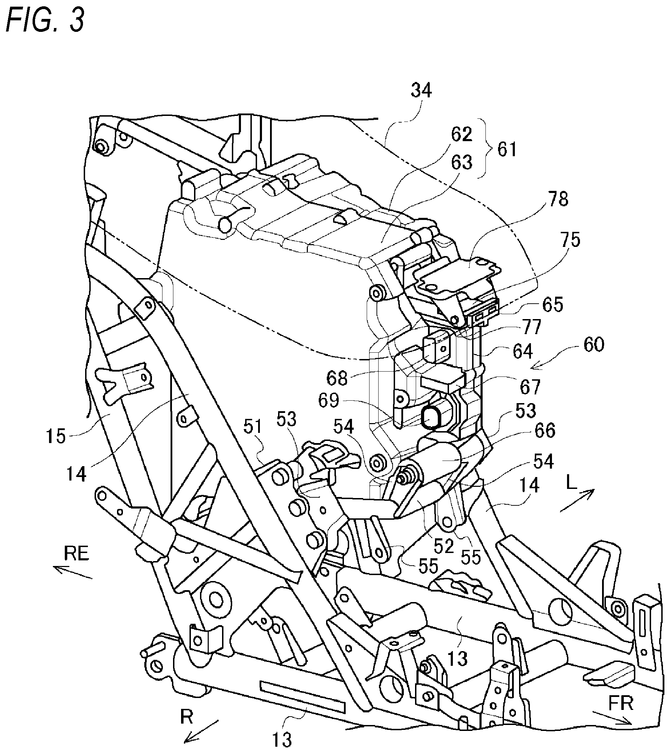

The seat 34 is supported by the electric straddle-type vehicle 1 so as to be openable and closable, and an accommodation space for a battery 60 (see Fig. 3) is formed inside the seat frame cover 24, below the seat 34. It is desired to ensure a large accommodation space for the battery 60 in order to increase the battery capacity, but in a configuration in which a seat is supported by a vehicle body frame as in a general straddle-type vehicle, it is difficult to ensure a wide accommodation space of the battery due to a complicated frame structure. In addition, there is also a problem that an assembling property of the battery with respect to the vehicle body frame is deteriorated due to the complicated frame structure.

It is also conceivable that a resin battery box accommodating the battery is provided inside a seat frame cover, and the seat is supported by the battery box so as to be openable and closable. Although a frame structure of the vehicle body frame is simplified, the accommodation space of the battery is narrowed by an amount of the battery box provided. In addition, there is a problem that the number of components is increased by the amount of the battery box provided. Therefore, in the straddle-type vehicle 1 of the present embodiment, the seat 34 is supported so as to be openable and closable with respect to the battery 60 so that the accommodation space of the battery 60 can be sufficiently ensured with a simple frame structure.

Hereinafter, a vehicle body frame and a battery of the present embodiment will be described with reference to Figs. 2 and 3. Fig. 2 is a right side view of the vehicle body frame and an electric device according to the present embodiment. Fig. 3 is a perspective view of the vehicle body frame and the battery according to the present embodiment. Fig. 3 shows a state in which the electric device other than the battery is detached from the vehicle body frame.

As shown in Fig. 2, a head pipe 11 into which a steering shaft (not shown) is inserted is provided in a front portion of the vehicle body frame 10. A front frame 12 extends downward from the head pipe 11, and a pair of lower frames 13 extend rearward from a lower portion of the front frame 12. A pair of seat frames 14 rise obliquely rearward from substantially middle portions of the pair of lower frames 13, and a pair of support frames 15 rise obliquely rearward from rear portions of the pair of lower frames 13. Rear portions of the pair of support frames 15 are connected to rear portions of the pair of seat frames 14 from below.

An accommodation space of the battery 60 is formed between the pair of seat frames 14 and the pair of support frames 15, that is, inside the seat frame cover 24. A charger 41 that converts power source power into DC power having a predetermined voltage, the battery 60 that is charged with the DC power from the charger 41, and a DC-DC converter 42 that steps down a voltage of the DC power are installed on an upper side of an installation space. A motor 43 that is driven by AC power is installed in a lower portion of the installation space. An inverter 44 that converts the DC power into AC power is installed in front of the motor 43, and the motor 43 is connected to the battery 60 via the inverter 44.

The pair of seat frames 14 and the pair of support frames 15 are connected to each other in a front-rear direction via a pair of pivot brackets 16. The swing arm (not shown) is connected to the pair of pivot brackets 16 so as to be swingable in an upper-lower direction, and the swing arm cover 36 is attached to the swing arm as described above. A sprocket (not shown) and a chain (not shown) of the motor 43 are covered by the swing arm cover 36. Electric power of the battery 60 is supplied to the motor 43, and a drive force is output from the motor 43 to the rear wheel 37 via the sprocket and the chain.

As shown in Fig. 3, an accommodation space of the battery 60 is formed below the seat 34, between the pair of seat frames 14 and the pair of support frames 15. A pair of holder plates 51 are provided on the seat frames 14, and a bridge 52 extending in a vehicle width direction is fixed to the pair of holder plates 51. Since the pair of seat frames 14 are connected to each other via the bridge 52, rigidity and strength of the entire vehicle body frame 10 are improved. The battery 60 is attached to an upper side of the bridge 52, and a motor 43 (see Fig. 2) is attached to a lower side of the bridge 52.

A pair of holder brackets 53 are provided at both ends of the bridge 52, and the pair of holder brackets 53 are fixed to the pair of holder plates 51. The pair of holder plates 51 protrude forward than the pair of seat frames 14, and the pair of holder brackets 53 protrude forward than the pair of holder plates 51. The bridge 52 is positioned forward than the seat frame 14 by the pair of holder brackets 53 and the pair of holder plates 51. The bridge 52 is curved forward from the pair of holder brackets 53 on an outer side in the vehicle width direction toward an inner side in the vehicle width direction so as not to interfere with a lower front side of the battery 60.

The bridge 52 is provided with a pair of battery brackets 54 and a pair of motor brackets 55 spaced apart in the vehicle width direction. The pair of battery brackets 54 protrude upward from the bridge 52 to support the battery 60 from below, and the pair of motor brackets 55 protrude downward from the bridge 52 to support the motor 43 from above. Base end portions of the brackets 54 and 55 are joined to a surface of the bridge 52, and tip end portions of the brackets 54 and 55 have mounting holes for screwing. The pair of battery brackets 54 support the battery 60 near a center of the bridge 52, and the pair of motor brackets 55 support the motor 43 on an outer side in the vehicle width direction than the pair of battery brackets 54.

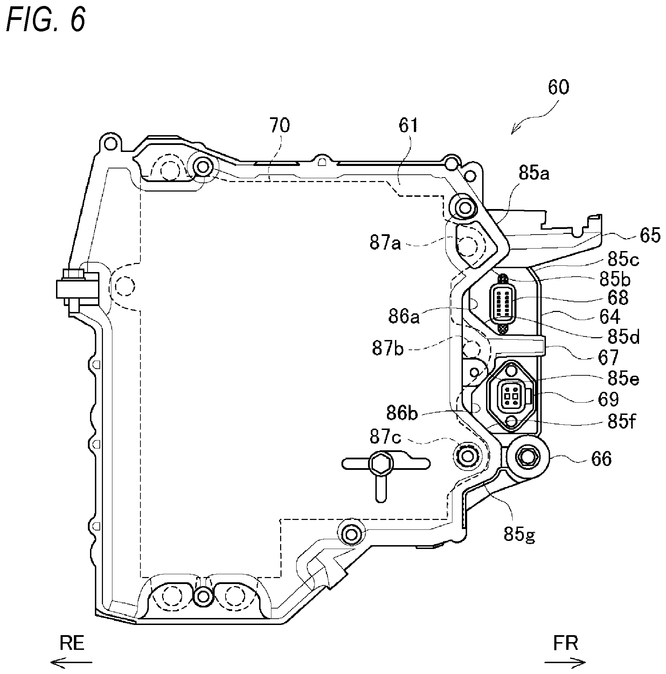

A battery module 70 (see Fig. 6) is accommodated in a battery case 61 of the battery 60. The battery module 70 connects a plurality of battery cells, and the battery module 70 is charged with electric power for traveling. The battery case 61 has a left and right split structure, and includes a case half body 62 on a left side and a case half body 63 on a right side. The case half body 62 on the left side is formed in a box shape with a right side opened, and the case half body 63 on the right side is formed in a box shape with a left side opened. The case half body 62 on the left side is positioned to a left side of the accommodation space, and the case half body 63 on the right side is positioned at a center of the accommodation space.

From a front surface of the battery 60, a vicinity of mating surfaces of the left case half body 62 and the right case half body 63 protrudes forward to form a vertically long protruding portion 64. A seat hinge portion 65 protrudes forward from an upper portion of a front surface of the case half body 63 on the right side, and a case fixing portion 66 protrudes forward from a lower portion of the front surface of the case half body 63. A partition wall 67 that divides a space on a right side of the protruding portion 64 into an upper space and a lower space is formed in a central portion of the front surface of the case half body 63. A low voltage harness connector 68 protrudes rightward from a right side surface of the protruding portion 64 between the seat hinge portion 65 and the partition wall 67, and a high voltage harness connector 69 protrudes rightward from the right side surface of the protruding portion 64 between the partition wall 67 and the case fixing portion 66.

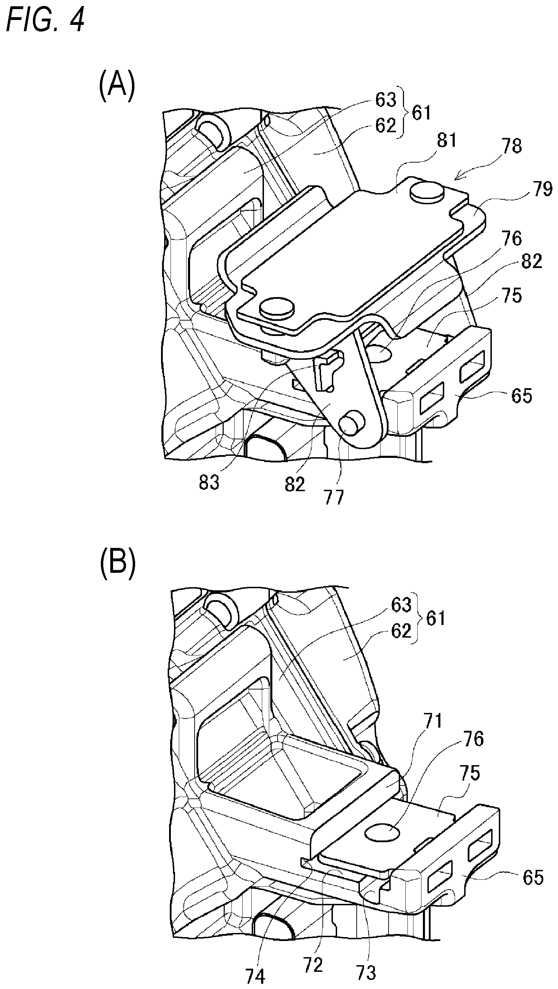

The seat hinge portion 65 is integrally cast with the case half body 63 on the right side, and a seat hinge bracket 78 fixed to the seat 34 is swingably supported on the seat hinge portion 65. A hinge pin 77 of the seat hinge bracket 78 enters a groove portion 73 (see (B) in Fig. 4) on the seat hinge portion 65, and the hinge pin 77 is prevented from coming off by a seat hinge plate 75. When the seat 34 is opened with the hinge pin 77 as a fulcrum, the battery 60 inside the seat frame cover 24 is exposed to the outside. A detailed configuration of the seat hinge portion 65 and the seat hinge bracket 78 will be described later.

The case fixing portion 66 is formed in a cylindrical shape with a mounting hole penetrating in the vehicle width direction. A long bolt is inserted into the mounting hole of the case fixing portion 66 and mounting holes of the pair of battery brackets 54, and the case fixing portion 66 is fixed to the pair of battery brackets 54 via the long bolt. Since the bridge 52 of the vehicle body frame 10 is brought close to the case fixing portion 66 of the battery case 61, the pair of battery brackets 54 are formed short to increase the supporting rigidity. Although not described in detail, the battery 60 is provided with a plurality of fixing portions that are fixed to the seat frame 14 in addition to the case fixing portion 66.

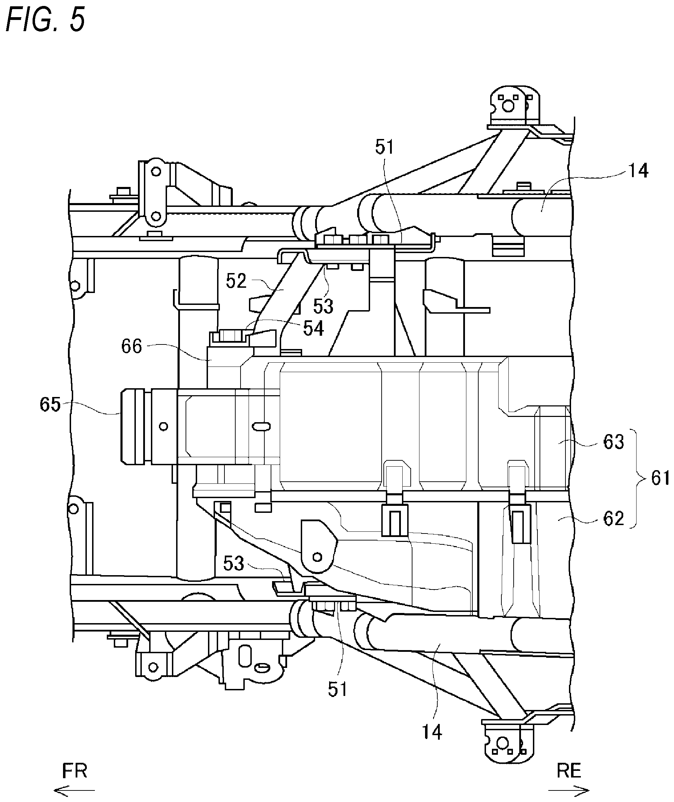

Hereinafter, a detailed configuration of the battery will be described with reference to Figs. 4 to 6. Fig. 4 is perspective view of the seat hinge portion according to the present embodiment, in which (A) in Fig. 4 shows a state in which the seat hinge bracket is attached, and (B) in Fig. 4 shows a state in which the seat hinge bracket is detached. Fig. 5 is a plan view of the battery according to the present embodiment. Fig. 6 is a right side view of the battery according to the present embodiment.

As shown in (A) and (B) in Fig. 4, the seat hinge portion 65 that supports the seat 34 (see Fig. 3) so as to be openable and closable is integrally formed in the battery case 61 (the case half body 63 on the right side). A concave portion 71 is formed in a substantially half portion on a tip end side of the seat hinge portion 65, and the groove portion 73 extending in the vehicle width direction is formed on a bottom surface 72 of the concave portion 71. A side surface of the concave portion 71 on a base end side is cut out in a narrow groove shape to form a holding surface 74, and an edge portion of the seat hinge plate 75 is inserted into the holding surface 74. The seat hinge plate 75 is fixed to the bottom surface 72 of the concave portion 71 by a fixing screw 76, and the groove portion 73 is covered with the seat hinge plate 75 to form a pin hole of the hinge pin 77.

The sheet hinge bracket 78 includes a support plate 79 that supports a seat plate (not shown) of the seat 34, and a holding plate 81 that is screwed to an upper surface of the support plate 79 via a spacer. By sandwiching the seat plate between the support plate 79 and the holding plate 81, the seat hinge bracket 78 is fixed to the seat plate. A pair of leg portions 82 spaced apart from each other in the vehicle width direction so as to sandwich the seat hinge portion 65 are provided on a lower surface of the support plate 79. Both axial sides of the hinge pin 77 is supported by tip end portions of the pair of leg portions 82, and both axial sides of an L-shaped regulation plate 83 in cross section is supported by a middle portion of the pair of leg portions 82.

The seat 34 is opened and closed by the seat hinge bracket 78 swinging around the hinge pin 77. When the seat 34 is opened, the seat hinge bracket 78 swings about 90° about the hinge pin 77, and the regulation plate 83 abuts against a tip end portion of the seat hinge portion 65 to regulate swinging of the seat hinge bracket 78. This makes it possible to work with the seat 34 open. The seat hinge portion 65 receives a downward load from the seat 34, but since the seat hinge portion 65 is integrated with the battery case 61, the seat hinge portion 65 has sufficient supporting rigidity against a load from the seat 34.

As shown in Fig. 5, the seat hinge portion 65 is formed in an upper portion of a front surface of the battery case 61, the case fixing portion 66 is formed in a lower portion of the front surface of the battery case 61, and the seat hinge portion 65 overlaps the case fixing portion 66 in a plan view. More specifically, a base end portion of the seat hinge portion 65 overlaps a central portion of the case fixing portion 66 in the vehicle width direction. A load acting on the seat hinge portion 65 from a seat 34 side is received by the case fixing portion 66 directly below the seat hinge portion 65. Therefore, a bending moment acting on the case fixing portion 66 is prevented, and the battery 60 is stably supported by the bridge 52 via the pair of battery brackets 54.

As shown in Fig. 6, a first inclined surface 85a inclined downward toward a front is formed in the upper portion of the front surface of the battery case 61. A lower side of the first inclined surface 85a is divided into a first recessed portion 86a on a right side in the vehicle width direction (front side in a paper) and the protruding portion 64 on a left side in the vehicle width direction (rear side in the paper). A second inclined surface 85b inclined downward from a lower end of the first inclined surface 85a toward a rear is formed in the first recessed portion 86a on the right side, and a third inclined surface 85c obtained by extending an inclined surface of the first inclined surface 85a is formed in the protruding portion 64 on a left side. A fourth inclined surface 85d inclined downward from a lower end of the second inclined surface 85b toward the front is formed in the first recessed portion 86a.

A second recessed portion 86b is formed below the first recessed portion 86a with the partition wall 67 interposed therebetween. A fifth inclined surface 85e inclined downward from a lower surface of the partition wall 67 toward the rear and a sixth inclined surface 85f inclined downward from a lower end of the fifth inclined surface 85e toward the front are formed in the second recessed portion 86b. A seventh inclined surface 85g inclined downward from a lower end of the sixth inclined surface 85f toward the rear is formed in the lower portion of the front surface of the battery case 61. Thus, on the front surface of the battery case 61, convex surfaces and concave surfaces are alternately formed from an upper side to a lower side by the first to seventh inclined surfaces 85a to 85g.

The seat hinge portion 65 protrudes toward the front from the first inclined surface 85a and the second inclined surface 85b. A cross-sectional area of a boundary between the first inclined surface 85a and the second inclined surface 85b and the seat hinge portion 65 is increased, and the supporting rigidity of the seat hinge portion 65 is increased with respect to the load from the seat 34 without increasing a size of the seat hinge portion 65. The right side surface of the protruding portion 64 is exposed to a front of the second inclined surface 85b and fourth inclined surface 85d of the first recessed portion 86a, and the low voltage harness connector 68 protrudes rightward from the right side surface of the protruding portion 64. Since the low voltage harness connector 68 is accommodated in the first recessed portion 86a, the low voltage harness connector 68 is protected from an external impact or the like.

The right side surface of the protruding portion 64 is exposed to a front of the fifth inclined surface 85e and the sixth inclined surface 85f of the second recessed portion 86b, and the high voltage harness connector 69 protrudes rightward from the right side surface of the protruding portion 64. Since the high voltage harness connector 69 is accommodated in the second recessed portion 86b, the high voltage harness connector 69 is protected from an external impact or the like. The case fixing portion 66 protrudes toward the front from the sixth inclined surface 85f and the seventh inclined surface 85g. A cross-sectional area of a boundary between the sixth inclined surface 85f and the seventh inclined surface 85g and the case fixing portion 66 is increased, and a supporting rigidity of the case fixing portion 66 is increased with respect to the load from the battery 60 without increasing a size of the case fixing portion 66.

A first to third module fixing portions 87a to 87c configured to fix the battery module 70 are formed inside the battery case 61. The first module fixing portion 87a is positioned in a triangular space inside the first inclined surface 85a and the second inclined surface 85b, and fixes an upper portion of a front edge of the battery module 70. The second module fixing portion 87b is positioned in a triangular space inside the fourth inclined surface 85d and the fifth inclined surface 85e, and fixes a central portion of the front edge of the battery module 70. The third module fixing portion 87c is positioned in a triangular space inside the sixth inclined surface 85f and the seventh inclined surface 85g, and fixes a lower portion of the front edge of the battery module 70.

The first module fixing portion 87a faces the base end portion of the seat hinge portion 65 with the first inclined surface 85a and the second inclined surface 85b interposed therebetween. A rigidity of the battery module 70 fixed to the first module fixing portion 87a reinforces a vicinity of the first inclined surface 85a and the second inclined surface 85b. The third module fixing portion 87c faces the case fixing portion 66 with the sixth inclined surface 85f and the seventh inclined surface 85g interposed therebetween. The rigidity of the battery module 70 fixed to the third module fixing portion 87c reinforces a vicinity of the sixth inclined surface 85f and the seventh inclined surface 85g. Accordingly, the supporting rigidity of the seat hinge portion 65 and the case fixing portion 66 is increased with respect to the load from the upper side. Although not described in detail, a plurality of module fixing portions other than the first to third module fixing portions 87a to 87c are provided inside the battery case 61.

As described above, according to the present embodiment, since the seat hinge portion 65 is formed in the battery case 61, a frame that attaches the seat hinge portion 65 below the seat 34 is not required. The accommodation space of the battery 60 is widened, and the battery capacity can be sufficiently ensured by increasing the size of the battery. Since the seat hinge portion 65 is integrally formed in the battery case 61, the supporting rigidity of the seat hinge portion 65 with respect to a load from the seat 34 side is ensured. In addition, a frame structure of the vehicle body frame 10 is simplified, and an assembling property of the battery 60 with respect to the vehicle body frame 10 is improved.

The battery of the present embodiment is not limited to the straddle-type vehicle of the scooter type, and may be adopted in other types of straddle-type vehicles. The straddle-type vehicle is not limited to a motorcycle, and may be a vehicle in which a battery is installed below the seat.

In the present embodiment, the seat hinge portion protrudes forward from the first inclined surface and the second inclined surface, but the seat hinge portion may protrude from at least one of the first inclined surface and the second inclined surface.

In the present embodiment, the convex surfaces and the concave surfaces are formed on the front surface of the battery case, but a shape of the front surface of the battery case is not particularly limited. For example, the front surface of the battery case may be formed flat, and the seat hinge portion may protrude from the flat front surface of the battery case.

In the present embodiment, the seat hinge portion protrudes from the front surface of the battery case, but the seat hinge portion may protrude from the battery case so as to support the seat so as to be openable and closable. For example, the seat hinge portion may protrude from a rear surface or a side surface of the battery case.

In the present embodiment, the seat hinge portion and the case fixing portion overlap each other in the battery case in the plan view, but a positional relationship between the seat hinge portion and the case fixing portion is not particularly limited.

In the present embodiment, the module fixing portion faces the base end portion of the seat hinge portion with the first inclined surface and the second inclined surface interposed therebetween, but a positional relationship between the module fixing portion and the seat hinge portion is not particularly limited.

In the present embodiment, the battery is fixed to the vehicle body frame, but a battery holder may be fixed to the vehicle body frame, and the battery may be detachably attached to the battery holder.

As described above, the battery (60) according to the present embodiment is a battery to be installed below the seat (34) of the electric straddle-type vehicle (1), and the battery (60) includes: the battery module (70) to which the electric power for traveling is charged; and the battery case (61) accommodating the battery module, in which the seat hinge portion (65) that supports the seat so as to be openable and closable is integrally formed in the battery case. According to this configuration, since the seat hinge portion is formed in the battery case, the frame that attaches the seat hinge portion below the seat is not required. The accommodation space of the battery is widened, and the battery capacity can be sufficiently ensured by increasing the size of the battery. Since the seat hinge portion is integrally formed in the battery case, the supporting rigidity of the seat hinge portion with respect to the load from the seat side is ensured.

In the battery of the present embodiment, the inclined surface (first inclined surface 85a) inclined downward toward the front is formed in the upper portion of the front surface of the battery case, and the seat hinge portion protrudes forward from the inclined surface. According to this configuration, the cross-sectional area of the boundary between the inclined surfaces and the seat hinge portion is increased, and the supporting rigidity of the seat hinge portion is increased with respect to the load from the seat side without increasing the size of the seat hinge portion.

In the battery of the present embodiment, the case fixing portion (66) to be fixed to the vehicle body frame is formed in the lower portion of the front surface of the battery case, and the seat hinge portion overlaps the case fixing portion in the plan view. According to this configuration, the load acting on the seat hinge portion from the seat side is received by the case fixing portion directly below the seat hinge portion. The bending moment acting on the case fixing portion is prevented, and the battery case is stably supported by the case fixing portion.

In the battery of the present embodiment, the module fixing portion (first module fixing portion 87a) fixing the battery module is formed inside the battery case, and the module fixing portion faces the base end portion of the seat hinge portion with the inclined surface interposed therebetween. According to this configuration, the rigidity of the battery module fixed to the module fixing portion reinforces the vicinity of the inclined surfaces of the battery case. Therefore, the supporting rigidity of the base end portion of the seat hinge portion can be increased with respect to the load from the seat side.

Although the present embodiment has been described, the above-described embodiment and modifications may be combined entirely or partially as another embodiment, not departing of the scope of the present invention as defined by the appended claims.

### REFERENCE SIGNS LIST

1: straddle-type vehicle
34: seat
60: battery
61: battery case
65: seat connection portion
66: case fixing portion
70: battery module
85a: first inclined surface (inclined surface)
87a: first module fixing portion (module fixing portion)

## Claims

1. A battery (60) to be installed below a seat (34) of an electric straddle-type vehicle (1), the battery (60) comprising:
a battery module (70) to which electric power for traveling is charged; and
a battery case (61) accommodating the battery module (70), wherein
a seat hinge portion (65) that supports the seat (34) so as to be openable and closable is integrally formed in the battery case (61),
wherein the battery case (61) has a left and right split structure, and includes a left side case half body (62) and a right side case half body (63), and
wherein the left side case half body (62) is formed in a box shape with a right side opened, and the right side case half body (63) is formed in a box shape with a left side opened, while the left side case half body (62) is positioned to a left side of an accommodation space, and the right side case half body is positioned at the center of the accommodation space.

2. The battery (60) according to claim 1, wherein
an inclined surface (85a) inclined downward toward a front is formed in an upper portion of a front surface of the battery case (61), and
the seat hinge portion (65) protrudes forward from the inclined surface (85a).

3. The battery (60) according to claim 2, wherein
a case fixing portion (66) to be fixed to a vehicle body frame (10) is formed in a lower portion of the front surface of the battery case (61), and
the seat hinge portion (65) overlaps the case fixing portion (66) in a plan view.

4. The battery (60) according to claim 2 or 3, wherein
a module fixing portion (87a) fixing the battery module (70) is formed inside the battery case (61), and
the module fixing portion (87a) faces a base end portion of the seat hinge portion (65) with the inclined surface (85a) interposed therebetween.

5. The battery (60) according to any one of claims 1 to 4, wherein
the seat hinge portion (65) is integrally cast with the battery case (61).

## Patentansprüche

1. Batterie (60), die unter einem Sitz (34) eines elektrischen Spreitzsitz-Fahrzeugs (1) zu installieren ist, wobei die Batterie (60) umfasst:
ein Batteriemodul (70), in das elektrische Energie zum Fahren geladen wird; und
ein Batteriegehäuse (61), das das Batteriemodul (70) aufnimmt, wobei
ein Sitzscharnierabschnitt (65), der den Sitz (34) trägt, so dass er öffenbar und schließbar ist, einstückig in dem Batteriegehäuse (61) gebildet ist,
wobei das Batteriegehäuse (61) eine links-rechts-geteilte Struktur hat und einen linksseitigen Gehäusehalbkörper (62) und einen rechtsseitigen Gehäusehalbkörper (63) aufweist, und
wobei der linksseitige Gehäusehalbkörper (62) kastenförmig gebildet ist, wobei eine rechte Seite geöffnet ist, und der rechtsseitige Gehäusehalbkörper (63) kastenförmig gebildet ist, wobei eine linke Seite geöffnet ist, während der linksseitige Gehäusehalbkörper (62) an einer linken Seite eines Aufnahmeraums positioniert ist und der rechtsseitige Gehäusehalbkörper in der Mitte des Aufnahmeraums positioniert ist.

2. Batterie (60) nach Anspruch 1, wobei
eine geneigte Fläche (85a), die nach unten zu einer Vorderseite hin geneigt ist, in einem oberen Abschnitt einer Vorderfläche des Batteriegehäuses (61) gebildet ist, und
der Sitzscharnierabschnitt (65) von der geneigten Fläche (85a) nach vorne ragt.

3. Batterie (60) nach Anspruch 2, wobei
ein Gehäusebefestigungsabschnitt (66), der an einem Fahrzeugkarosserierahmen (10) zu befestigen ist, in einem unteren Abschnitt der Vorderfläche des Batteriegehäuses (61) gebildet ist, und
der Sitzscharnierabschnitt (65) den Gehäusebefestigungsabschnitt (66) in einer Draufsicht überlappt.

4. Batterie (60) nach Anspruch 2 oder 3, wobei
ein Modulbefestigungsabschnitt (87a), der das Batteriemodul (70) befestigt, im Inneren des Batteriegehäuses (61) gebildet ist, und
der Modulbefestigungsabschnitt (87a) einem Basisendabschnitt des Sitzscharnierabschnitts (65) zugewandt ist, wobei die geneigte Fläche (85a) dazwischen angeordnet ist.

5. Batterie (60) nach einem der Ansprüche 1 bis 4, wobei
der Sitzscharnierabschnitt (65) einstückig mit dem Batteriegehäuse (61) gegossen ist.

## Revendications

1. Batterie (60) destinée à être installée sous un siège (34) d'un véhicule électrique de type monté à califourchon (1), la batterie (60) comprenant :
un module de batterie (70) dans lequel est stockée l'énergie électrique destinée au déplacement ; et
un boîtier de batterie (61) logeant le module de batterie (70), dans laquelle
une partie charnière du siège (65) qui supporte le siège (34) de manière à pouvoir être ouverte et fermée est formée d'un seul tenant dans le boîtier de batterie (61),
dans laquelle le boîtier de batterie (61) a une structure divisée gauche et droite, et comporte un demi-corps de boîtier latéral gauche (62) et un demi-corps de boîtier latéral droit (63), et
dans laquelle le demi-corps de boîtier latéral gauche (62) est formé en caisson ouvert d'un côté droit, et le demi-corps de boîtier latéral droit (63) est formé en caisson ouvert d'un côté gauche, tandis que le demi-corps de boîtier latéral gauche (62) est positionné sur un côté gauche d'un espace de logement, et le demi-corps de boîtier latéral droit est positionné au centre de l'espace de logement.

2. Batterie (60) selon la revendication 1, dans laquelle
une surface inclinée (85a) inclinée vers le bas en direction de l'avant est formée dans une partie supérieure d'une surface avant du boîtier de batterie (61), et
la partie charnière du siège (65) fait saillie vers l'avant à partir de la surface inclinée (85a).

3. Batterie (60) selon la revendication 2, dans laquelle
une partie de fixation du boîtier (66) destinée à être fixée à un châssis de carrosserie de véhicule (10) est formée dans une partie inférieure de la surface avant du boîtier de batterie (61), et
la partie charnière du siège (65) chevauche la partie de fixation du boîtier (66) dans une vue en plan.

4. Batterie (60) selon la revendication 2 ou 3, dans laquelle
une partie de fixation de module (87a) fixant le module de batterie (70) est formée à l'intérieur du boîtier de batterie (61), et
la partie de fixation de module (87a) fait face à une partie d'extrémité de base de la partie charnière du siège (65) avec la surface inclinée (85a) interposée entre elles.

5. Batterie (60) selon l'une quelconque des revendications 1 à 4, dans laquelle
la partie charnière du siège (65) est moulée d'un seul tenant avec le boîtier de batterie (61).
